# FASCICULE DE BREVET EUROPEEN

(11) **EP 1 070 617 B1**
(45) Date de publication et mention de la délivrance du brevet: **21.04.2004**
(21) Numéro de dépôt: 00401962.6
(22) Date de dépôt: 07.07.2000
(51) Int. Cl.: B60J 7/08

(54) **Dispositif de bâchage de conteneur**
Abdeckvorrichtung für einen Container
Device for covering a container with a tarpaulin

(30) Priorité: 22.07.1999 FR 9909525
(43) Date de publication de la demande: 24.01.2001
(73) Titulaire: MANITOU BF, F-44150 Ancenis (FR)
(72) Inventeur: Braud, Marcel-Claude, 49270 Champ'Toceaux (FR)
(74) Mandataire: Kaspar, Jean-Georges

(56) Documents cités:
- EP-A- 0 581 512
- EP-A- 0 906 841
- US-A- 3 549 198
- US-A- 3 656 802
- US-A- 5 125 713

## Description

L'invention est relative à un dispositif de bâchage de conteneur.

L'invention est particulièrement utile dans son application destinée au bâchage de conteneurs utilisés pour la collecte de déchets.

On sait que la collecte des déchets peut être réalisée à l'aide de conteneurs amovibles aptes à être chargés sur un camion porte-conteneur ou sur une remorque. Ces conteneurs sont déchargés du camion ou de la remorque généralement à l'aide d'un bras hydraulique disposé à demeure sur le camion ou la remorque et déposés au sol en attendant leur remplissage. Après remplissage, les conteneurs sont à nouveau chargés sur un camion porte-conteneur ou une remorque et sont emmenés vers une destination prédéterminée. Pour éviter les envols de déchets légers pendant le transport ou les chutes des déchets, il est impératif de bâcher ces conteneurs.

De manière habituelle, le bâchage d'un tel conteneur est effectué manuellement par le conducteur du camion, en déroulant une bâche sur le sommet du conteneur. Cette opération manuelle de bâchage est pénible, longue et fastidieuse, tout en présentant des risques pour l'opérateur.

On connaît également un autre procédé de bâchage de conteneur, dans lequel deux opérateurs situés de part et d'autre du camion déroulent une bâche au-dessus du conteneur, en supportant le rouleau de bâche au bout de perches ou moyens analogues.

Enfin, on connaît également un procédé de bâchage du conteneur, dans lequel un mât vertical est disposé entre l'arrière de la cabine du camion et l'avant du conteneur et porte le rouleau de bâche. Le mât vertical est conformé de manière à élever en hauteur le rouleau de bâche, et le conducteur du camion déroule la bâche au-dessus du conteneur par traction à l'aide d'une corde ou autre lien souple. Cette opération de bâchage s'avère parfois difficile, dans le cas où des déchets de forme irrégulière dépassant du haut du conteneur s'accrochent dans la bâche en empêchant le bon déroulement de la bâche.

Le document EP 0 581 512 A1 décrit un mécanisme de bâchage à écartement variable.

L'invention a pour but de remédier à ces inconvénients en proposant un nouveau dispositif de bâchage de conteneur, de fabrication simple et économique, permettant en toute sécurité à un opérateur de bâcher ou de débâcher un conteneur chargé sur un camion ou sur une remorque porte-conteneur.

Un avantage particulier de l'invention est que le dispositif permet la circulation du camion ou de la remorque porte-conteneur sur route, en raison du fait que le dispositif ne dépasse pas latéralement du camion ou de la remorque porte-conteneur lors de la circulation sur route.

L'invention a pour objet un dispositif de bâchage de conteneur comportant des moyens aptes à être solidarisés à un conteneur, un camion ou une remorque porte-conteneur ou rendus solidaires d'un conteneur, un camion ou une remorque porte-conteneur ; lesdits moyens étant déplaçables transversalement au conteneur, au camion ou à la remorque porte-conteneur et étant aptes à pivoter par rapport au conteneur, au camion ou à la remorque porte-conteneur pour fixer l'extrémité d'une bâche enroulée à une extrémité du conteneur, puis à pivoter à nouveau pour dérouler ladite bâche et recouvrir le conteneur pour le bâcher ; ainsi qu'à effectuer les opérations inverses pour débâcher le conteneur.

Selon d'autres caractéristiques de l'invention :
- les moyens déplaçables transversalement sont déplaçables entre une position sortie permettant le pivotement, le déroulement ou l'enroulement de la bâche et une position rentrée d'escamotage transversal intérieurement au contour transversal du camion.
- les moyens déplaçables transversalement comportent un bras télescopique portant un rouleau motorisé d'enroulement et de déroulement de la bâche maintenue sous tension.
- les moyens déplaçables transversalement présentent une conformation sensiblement en équerre ou coudée, apte à être escamotée transversalement sous et devant le conteneur.
- les moyens déplaçables transversalement sont déplaçables sous l'action de moyens d'actionnement du déplacement transversal sensiblement coaxiaux à l'axe de pivotement.
- lesdits moyens d'actionnement du déplacement transversal comportent un tube ou un cylindre coulissant de vérin portant un organe d'accrochage d'un moyen actionneur dudit pivotement
- lesdits moyens déplaçables transversalement sont solidaires d'une extrémité d'un moyen d'actionnement du déplacement transversal.
- les moyens déplaçables transversalement sont montés à pivotement autour d'un axe situé sous le conteneur.
- les moyens déplaçables transversalement sont des moyens à distance variable entre une grande distance permettant de disposer une extrémité de bâche à proximité de ladite extrémité du conteneur et une distance réduite permettant d'appliquer la bâche sous tension sur le conteneur.
- le dispositif comporte un automatisme combinant déplacement transversal et pivotement desdits moyens déplaçables transversalement, de manière à effectuer de manière automatique ou semi-automatique le bâchage d'un conteneur prédéterminé.

L'invention sera mieux comprise grâce à la description qui va suivre donnée à titre d'exemple non limitatif en référence aux dessins annexés dans lesquels :
La figure 1 représente schématiquement une vue de dessus avec arrachement partiel d'un camion porte-conteneur muni d'un dispositif selon l'invention.
La figure 2 représente schématiquement une vue en élévation dans le sens de la flèche II de la figure 1 d'un camion porte-conteneur muni d'un dispositif suivant l'invention.
Les figures 3 et 4 représentent respectivement une vue en élévation latérale dans le sens de la flèche III de la figure 4 et une vue de dessus avec arrachement partiel dans le sens de la flèche IV de la figure 3 d'un camion porte-conteneur muni d'un dispositif selon l'invention en cours de télescopage.
Les figures 5 et 6 représentent respectivement une vue en élévation latérale dans le sens de la flèche V de la figure 6 et une vue de dessus avec arrachement partiel dans le sens de la flèche VI de la figure 5 d'un camion porte-conteneur selon l'invention muni d'un dispositif en position de pivotement arrière.
Les figures 7 et 8 représentent respectivement une vue en élévation latérale dans le sens de la flèche VII de la figure 8 et une vue de dessus avec arrachement partiel dans le sens de la flèche VIII de la figure 7 d'un camion porte-conteneur muni d'un dispositif selon l'invention en position de déroulement de bâche.
Les figures 9 et 10 représentent respectivement une vue en élévation latérale d'un camion portant un grand conteneur et une vue en élévation latérale d'un camion portant un petit conteneur, dans lesquelles un dispositif selon l'invention maintient la bâche appliquée sur le conteneur.
La figure 11 représente schématiquement une vue partielle de dessus d'un dispositif selon l'invention comportant des moyens de déplacement transversal par rapport au châssis d'un camion porte-conteneur.
La figure 12 représente schématiquement une vue en coupe selon la ligne XII-XII de la figure 11 des moyens de déplacement transversal de la figure 11.
La figure 13 représente schématiquement une vue de dessus d'un deuxième mode de réalisation de moyens de déplacement transversal de dispositif selon l'invention.
La figure 14 représente schématiquement une vue en coupe selon la ligne XIV-XIV de la figure 13 du deuxième mode de réalisation de moyens de déplacement transversal de dispositif selon l'invention.
La figure 15 représente schématiquement une vue de dessus d'un autre mode préféré de réalisation de moyens de déplacement transversal de dispositif selon l'invention.
La figure 16 représente schématiquement une vue en coupe selon la ligne XVI-XVI de la figure 15 du mode préféré de réalisation de moyens de déplacement transversal de dispositif selon l'invention.

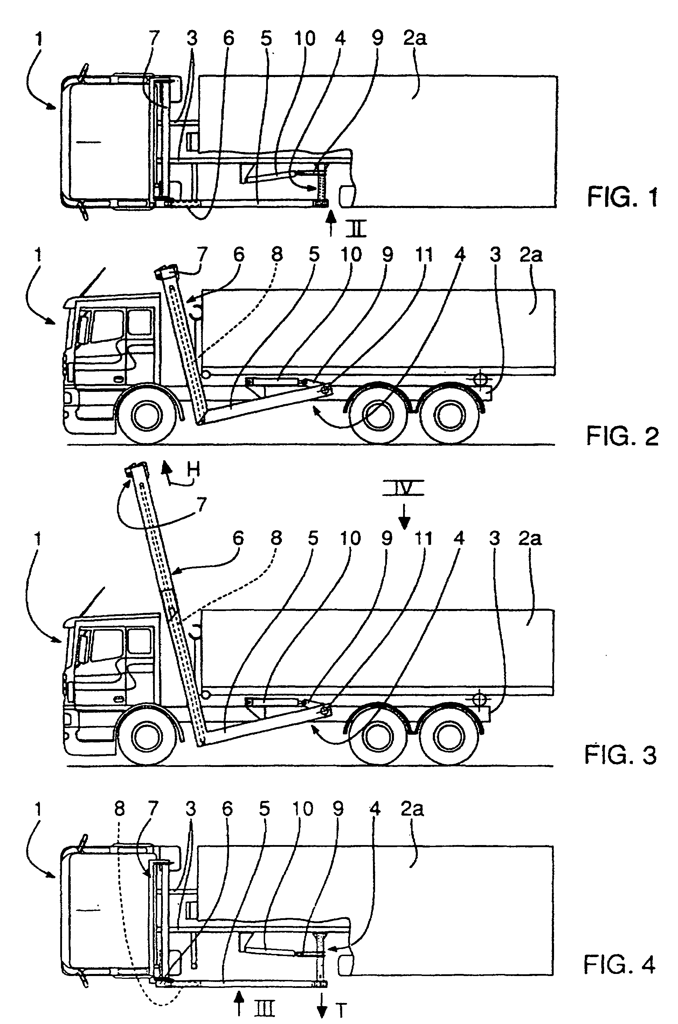

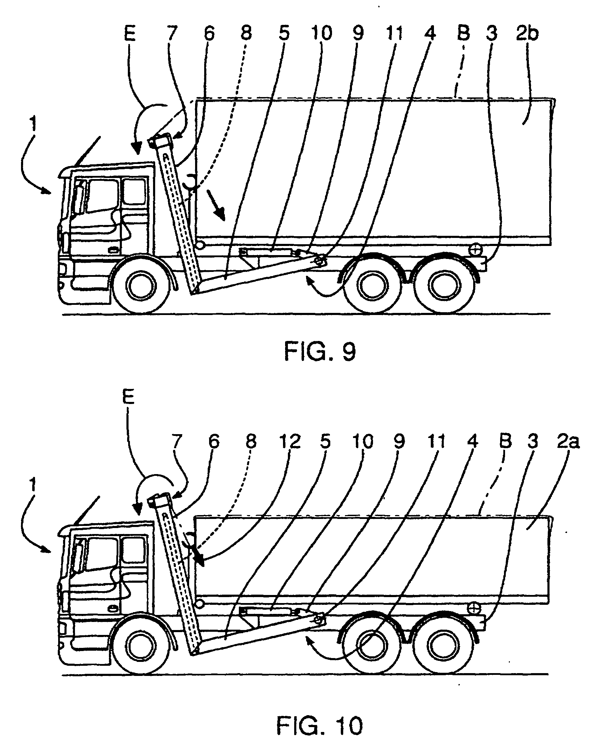

En référence aux figures 1 à 10, un camion porte-conteneur désigné par la référence 1 porte un conteneur, en particulier un conteneur amovible destiné à la collecte de déchets. Sur les figures 1 à 8, le camion 1 porte un conteneur 2a de petite taille, tandis que la camion 1 porte un conteneur 2b de grande taille sur la figure 9.

Le camion 1 comporte un châssis, comportant deux longerons 3, constitués par exemple sous forme de profilés en U.

La semelle verticale d'un longeron 3 porte à demeure des moyens de déplacement transversal par rapport au camion d'un dispositif de bâchage de conteneur selon l'invention.

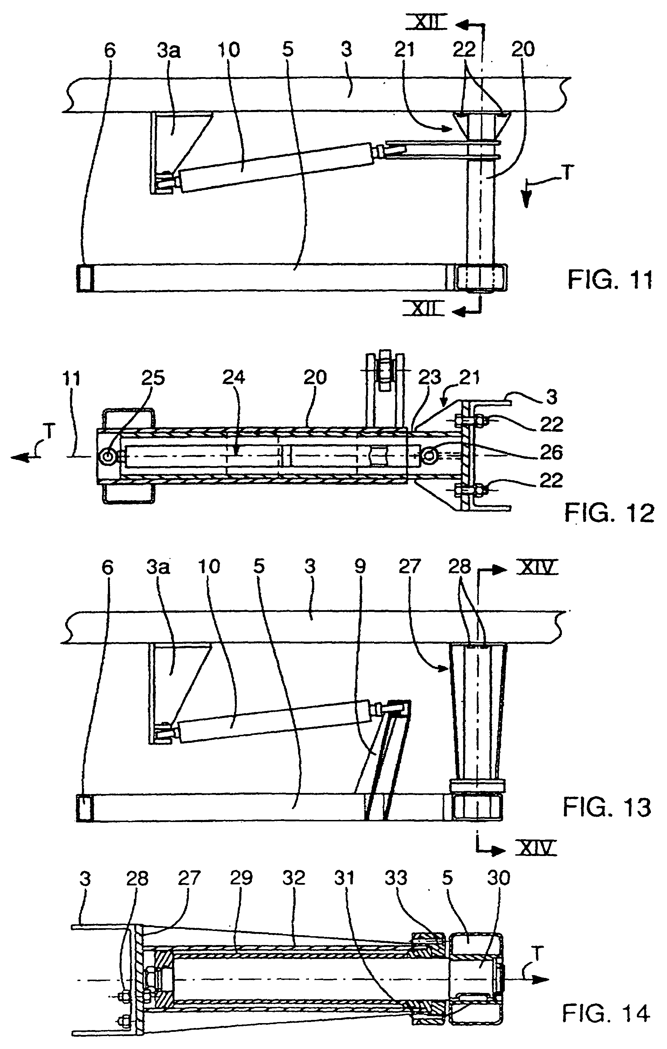

Les moyens de déplacement transversal désignés dans leur ensemble par 4 sont décrits plus loin en référence aux figures 11 à 14.

Sur les figures 1 et 2, le longeron 3 porte un dispositif selon l'invention présentant une conformation en équerre avec une branche inférieure 5 et une branche supérieure 6. Une des deux branches 5 ou 6 est de préférence conformée en bras télescopique. La branche supérieure 6 porte un rouleau 7 motorisé d'enroulement et de déroulement d'une bâche destinée à bâcher le conteneur 2a ou 2b.

De préférence, le bras télescopique 6 comporte un vérin intérieur 8 de télescopage, tandis que la branche inférieure 5 est solidaire d'un gousset 9 relié à un vérin de pivotement 10 dont une extrémité est articulée sur un organe solidaire du longeron 3 et l'autre extrémité est articulée sur le gousset 9 en vue de faire pivoter l'équerre avec ses deux branches 5 et 6, le rouleau motorisé 7 et le vérin de télescopage 8 ensemble autour d'un axe de pivotement 11.

Sur les figures 3 et 4, les moyens 4 de déplacement transversal déplacent le dispositif dans le sens de la flèche T depuis sa position escamotée des figures 1 et 2 jusqu'à une position de sortie transversale des figures 3 et 4, tandis que le bras télescopique 6 s'allonge sous l'action du vérin 8 de télescopage de manière à déplacer le rouleau motorisé 7 vers le haut dans le sens de la flèche H.

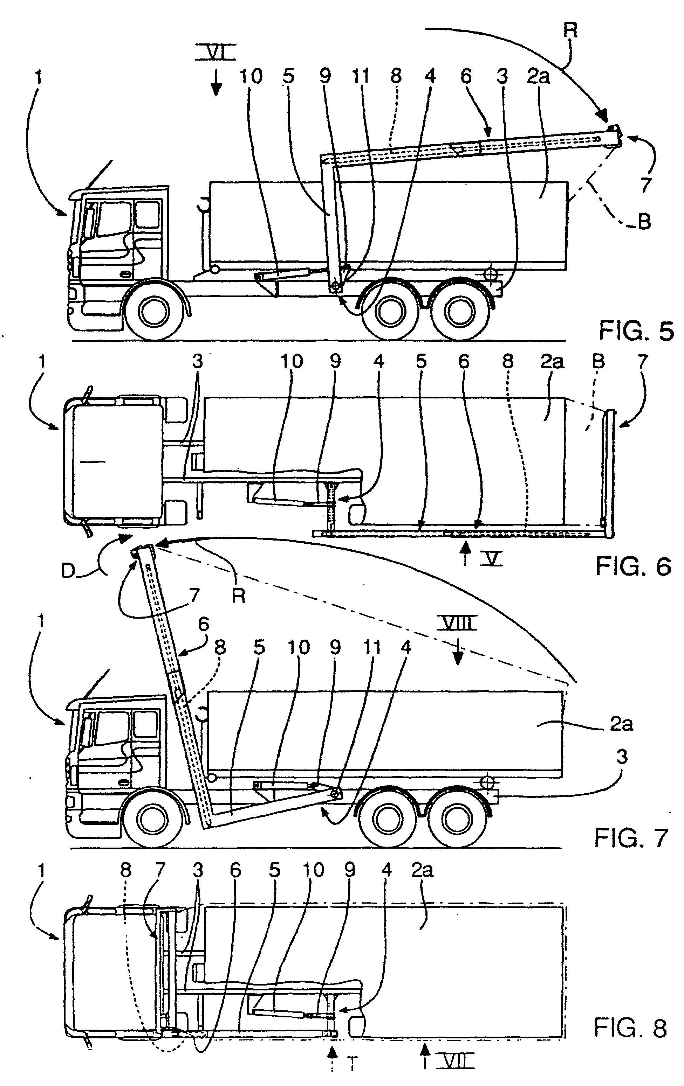

Sur les figures 5 et 6, le dispositif avec son bras télescopique allongé pivote vers l'arrière dans le sens de la flèche R jusqu'à une position permettant l'accrochage d'une bâche B représentée en traits pointillés à l'arrière du conteneur 2a. Le pivotement vers l'arrière du dispositif dans sa position de sortie transversale est effectué sous l'action du vérin de pivotement 10 agissant sur le gousset 9 solidaire de la branche inférieure 5 de la conformation en équerre, en raison du fait que cette branche inférieure 5 est solidaire d'un tube porte-gousset monté en rotation autour de l'axe de pivotement 11.

En raison du fait que le rouleau 7 portant la bâche B enroulée est déplacé transversalement par rapport au conteneur 2a et à l'axe du camion 1, la bâche B est déplacée latéralement au cours de son déroulement par son rouleau motorisé 7.

Pour assurer un bon déroulement de la bâche B ainsi qu'un bon enroulement postérieur lors du débâchage malgré ce désaxage latéral, on prévoit que le rouleau motorisé 7 maintient la bâche B constamment sous tension au cours de son déroulement ou de son enroulement postérieur.

Sur les figures 7 et 8, la bâche B a été entièrement déroulée par le rouleau motorisé 7 dans son mouvement dans le sens de la flèche D. Ce déroulement de la bâche B maintenue sous tension est effectué simultanément à un pivotement du dispositif vers l'avant autour de l'axe 11 de pivotement sous l'action du vérin 10 de pivotement agissant sur le gousset 9.

Pendant ce mouvement, le bras télescopique 6 est maintenu dans sa position allongée par le vérin 8 de télescopage jusqu'à la position représentée sur les figures 7 et 8. Dans cette position de déroulement de la bâche B, les moyens 4 de déplacement transversal dans le sens de la flèche T sont actionnés pour provoquer l'escamotage transversal du dispositif sous et devant le conteneur 2a, de manière que le dispositif ne dépasse pas transversalement du camion 1.

Cet escamotage transversal permet de respecter les normes relatives à la largeur hors tout des véhicules circulant sur route.

Sur les figures 9 et 10, après avoir escamoté transversalement le dispositif maintenant la bâche B sous tension à l'aide des moyens 4 de déplacement transversal, on plaque la bâche B sur le dessus d'un conteneur 2a ou 2b en rentrant le tube télescopique 6 à l'aide du vérin 8 de télescopage, tout en maintenant constamment la bâche B sous tension grâce au rouleau motorisé 7 agissant maintenant dans le sens de la flèche E correspondant au sens d'enroulement.

Le bâchage d'un conteneur 2b de grande taille est ainsi réalisé de manière rapide et économique. On peut également prévoir un automatisme combinant déplacement transversal, pivotement et télescopage pour effectuer automatiquement ou semi-automatiquement la séquence des opérations décrites en référence aux figures 1 à 9.

Pour bâcher un conteneur 2a de petite taille sur la figure 10, on prévoit de préférence sur la bâche B des moyens de mise sous tension agissant localement à l'avant du conteneur 2a pour maintenir la bâche B constamment plaquée sur le dessus du conteneur. Ces moyens de mise sous tension peuvent par exemple comporter un moyen élastique monté dans la bâche B à la manière d'une ralingue, de manière à constituer un point de tension intermédiaire agissant au niveau de la flèche 12.

On peut également prévoir un volet cousu à la bâche à l'emplacement 12 pour fixer la bâche au conteneur, puis mettre sous tension la bâche B en agissant à l'aide du rouleau motorisé 7 dans le sens d'enroulement E.

En référence aux figures 11 et 12, un premier mode de réalisation de moyens de déplacement transversal est représenté solidaire d'un longeron 3 portant un organe 3a sur lequel est articulé le vérin de pivotement 10 relié à un gousset 9 de commande de pivotement soudé sur un tube coulissant 20 relié à son tour à la branche 5 de la conformation en équerre comportant les branches 5 et 6.

Le longeron 3 porte une base 21 boulonnée au longeron 3 par l'intermédiaire de boulons 22. La base 21 porte un tube intérieur 23 sur lequel le tube coulissant 20 est monté à rotation autour de l'axe de pivotement 11 sous la commande du vérin 10 agissant sur le gousset 9 solidaire du tube 20. Les tubes 23 et 20 contiennent un vérin 24 de déplacement transversal dont une extrémité est articulée sur un axe 25 solidaire du tube 20 tandis que l'autre extrémité du vérin 24 est articulée sur un axe 26 solidaire du tube fixe 23. L'allongement du vérin 24 dans le sens de la flèche T produit par conséquent la sortie transversale du dispositif hors du contour transversal du camion.

En référence aux figures 13 et 14, un autre mode de réalisation de l'invention comporte une base 27 boulonnée sur le longeron 3 au moyen de boulons 28.

Cette base 27 fait partie d'un vérin 29 avec une partie sortante, par exemple une tige 30 provoquant un déplacement transversal dans le sens de la flèche T ou dans le sens opposé.

A cet effet, on prévoit de claveter directement la branche 5 d'équerre sur la tige 30 du vérin 29 au moyen d'une clavette 31.

Le vérin 29 comporte une chambre cylindrique 32 solidaire de la base 27 et obturée par une bride 33 d'extrémité. Ce montage simple et économique permet d'éviter l'interposition éventuelle de patins de frottement de coulissement et de pivotement éventuellement nécessaires entre les tubes 23 et 20 des figures 11 et 12.

Alternativement, un autre mode de réalisation de vérin porteur de la branche 5 peut comporter un cylindre coulissant de vérin supportant directement la branche 5 et le gousset 9 soudé à une bride de fermeture telle que 27 ou 33 du cylindre de vérin, tandis que la tige de ce vérin est solidarisée à un longeron 3.

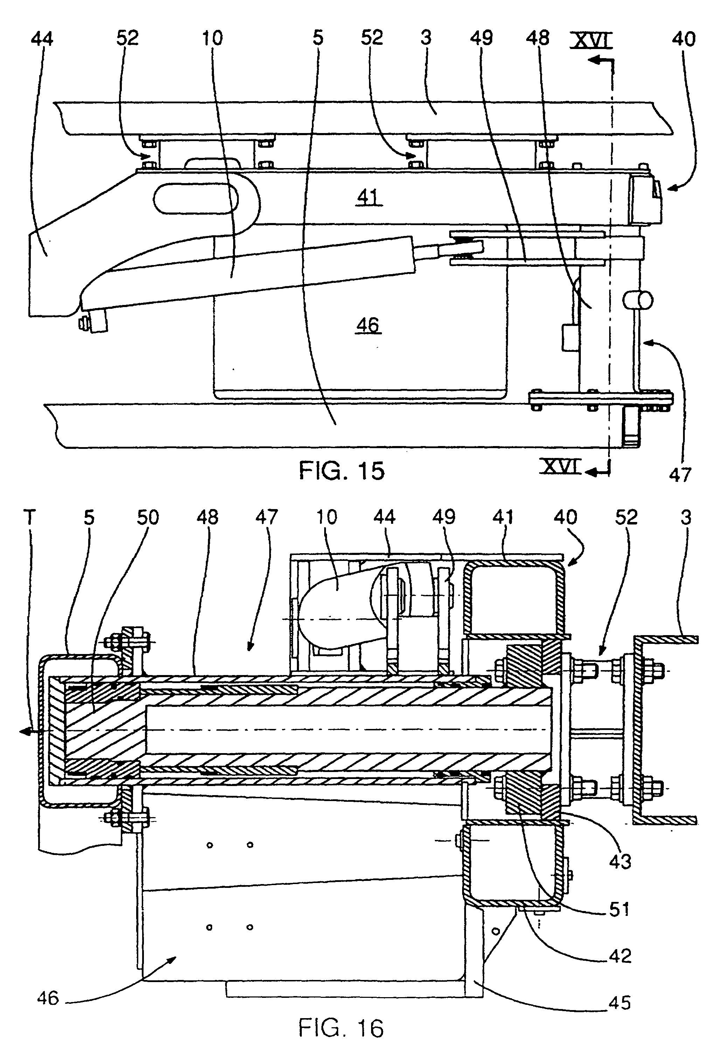

En référence aux figures 15 et 16, un tel autre mode préféré de réalisation se présente sous la forme d'un châssis 40 de support, de préférence mécanosoudé, comportant deux longerons 41, 42 solidarisés à une plaque 43 de forte épaisseur.

Le longeron supérieur 41 est relié à un organe 44 sur lequel est articulé un vérin 10 de pivotement. Le longeron inférieur 42 porte une équerre 45 de support d'un coffre 46 contenant la centrale hydraulique, les distributeurs hydrauliques et tous les moyens de commande et de contrôle assurant le fonctionnement du dispositif.

Le déplacement transversal de la branche inférieure 5 de conformation en équerre est obtenu par un vérin 47 de déplacement transversal T. La branche inférieure 5 est solidarisée au cylindre 48 du vérin 47 de déplacement transversal, par exemple par assemblage boulonné de deux brides circulaires.

Le cylindre 48 porte également un gousset 49 de pivotement sous l'action du vérin 10 de pivotement.

Dans ce mode préféré de réalisation, la tige 50 du vérin 47 de déplacement transversal est solidarisée au châssis 40 de support.

A cet effet, on peut prévoir de souder la tige 50 à une bride circulaire 51 de forte épaisseur, destinée à être boulonnée au châssis 40 de support, par exemple à la tôle 43 du châssis 40.

Ce mode de réalisation permet d'effectuer l'assemblage préalable de tous les éléments constitutifs du dispositif sur le châssis 40 de support et de contrôler la géométrie et le fonctionnement de cet assemblage, avant de le monter sur un conteneur, un camion ou une remorque porte-conteneur.

Après assemblage et contrôle du dispositif sur son support 40, il suffit ensuite d'assembler le dispositif à un longeron 3 de conteneur, camion ou remorque porte-conteneur avec interposition éventuelle d'entretoises 52 d'interface et de montage.

Ainsi, ce mode préféré de réalisation de l'invention peut être fabriqué et contrôlé indépendamment du type de conteneur, camion ou remorque porte-conteneur auquel il est destiné : la seule modification nécessaire pour passer d'un modèle de conteneur, camion ou remorque porte-conteneur à un autre modèle, est le remplacement des entretoises 52 par des autres entretoises 52 d'adaptation à cet autre modèle.

L'invention décrite en référence à plusieurs modes de réalisation particuliers n'y est nullement limitée, mais couvre également d'autres modes de réalisation non représentés sur les dessins.

Ainsi, par exemple, le dispositif peut présenter une forme différente d'une forme d'équerre, le bras 5 sensiblement horizontal peut être télescopique et le bras 6 sensiblement vertical peut être de longueur fixe ; ou alternativement, les moyens télescopiques peuvent être remplacés par d'autres moyens de déplacement, par exemple une conformation dépliable et repliable en Z, en V ou en W.

L'invention s'applique à toutes sortes de conteneurs amovibles ou non, notamment aux bennes basculantes de camion.

L'invention s'applique également à des dispositifs solidaires de ces conteneurs amovibles ou non, ou aptes à leur être solidarisés.

## Revendications

1. Dispositif de bâchage de conteneur (2a ou 2b) comportant des moyens (4 - 9) aptes à être solidarisés à un conteneur, un camion (1) ou une remorque porte-conteneur ou rendus solidaires d'un conteneur, un camion (1) ou une remorque porte-conteneur; lesdits moyens (4 - 9) étant déplaçables transversalement (T) au conteneur, au camion (1) ou à la remorque porte-conteneur et étant aptes à pivoter (R) par rapport au conteneur, au camion (1) ou à la remorque porte-conteneur pour fixer l'extrémité d'une bâche (B) enroulée à une extrémité du conteneur (2a ou 2b), puis à pivoter à nouveau pour dérouler ladite bâche (B) et recouvrir le conteneur (2a ou 2b) pour le bâcher ; ainsi qu'à effectuer les opérations inverses pour débâcher le conteneur.

2. Dispositif selon la revendication 1, **caractérisé en ce que** les moyens (4-9) déplaçables transversalement sont déplaçables entre une position sortie permettant le pivotement (R), le déroulement (D) ou l'enroulement (E) de la bâche (B) et une position rentrée d'escamotage transversal intérieurement au contour transversal du camion.

3. Dispositif selon la revendication 1 ou la revendication 2, **caractérisé en ce que** les moyens (4 - 9) déplaçables transversalement comportent un bras télescopique (6) portant un rouleau motorisé (7) d'enroulement (E) et de déroulement (D) de la bâche (B) maintenue sous tension.

4. Dispositif selon l'une quelconque des revendications précédentes, **caractérisé en ce que** les moyens (4 - 9) déplaçables transversalement présentent une conformation sensiblement en équerre (5 - 6) ou coudée, apte à être escamotée transversalement sous et devant le conteneur (2a ou 2b).

5. Dispositif selon l'une quelconque des revendications précédentes, **caractérisé en ce que** les moyens (4 - 9) déplaçables transversalement sont déplaçables sous l'action de moyens (24, 29, 47) d'actionnement du déplacement (T) transversal sensiblement coaxiaux à l'axe de pivotement (R).

6. Dispositif selon la revendication 5, **caractérisé en ce que** lesdits moyens (24, 29, 47) d'actionnement du déplacement (T) transversal comportent un tube ou un cylindre coulissant (20, 48) de vérin (47) portant un organe d'accrochage (9) d'un moyen actionneur (10) dudit pivotement (R).

7. Dispositif selon la revendication 6, **caractérisé en ce que** lesdits moyens (4 - 9) déplaçables transversalement sont solidaires d'une extrémité (30) d'un moyen d'actionnement ( 29, 47) du déplacement transversal (T).

8. Dispositif selon l'une quelconque des revendications précédentes, **caractérisé en ce que** les moyens (4 - 9) déplaçables transversalement sont montés à pivotement autour d'un axe (11) situé sous le conteneur (2a ou 2b).

9. Dispositif selon la revendication 8, **caractérisé en ce que** les moyens (4 - 9) déplaçables transversalement sont des moyens à distance variable entre une grande distance permettant de disposer une extrémité de bâche (B) à proximité de ladite extrémité du conteneur et une distance réduite permettant d'appliquer la bâche (B) sous tension sur le conteneur.

10. Dispositif selon l'une quelconque des revendications précédentes, **caractérisé en ce que** le dispositif comporte un automatisme (46) combinant déplacement transversal (T) et pivotement (R) desdits moyens (4 - 9) déplaçables transversalement, de manière à effectuer de manière automatique ou semi-automatique le bâchage d'un conteneur prédéterminé.

## Patentansprüche

1. Vorrichtung zum Abdecken eines Containers (2a oder 2b) mittels einer Plane mit zum Befestigen an einem Container, einem Lastkraftwagen (1) oder an einem Container-Anhänger geeigneten oder daran befestigten Mittel (4 bis 9), die quer (T) bezüglich des Containers, des Lastkraftwagens (1) oder des Container-Anhängers bewegbar und zum Schwenken (R) mit Bezug auf den Container, den Lastkraftwagen (1) oder den Container-Anhänger zum Befestigen des Endes einer an einem Ende des Containers (2a oder 2b) aufgerollten Plane (B) und anschließendem, erneuten Schwenken zum Abrollen der Plane (B) und Abdecken des Containers (2a oder 2b) mit der Plane sowie zum Durchführen der umgekehrten Bewegungen zum Aufdecken des Containers geeignet sind.

2. Vorrichtung nach Anspruch 1, **dadurch gekennzeichnet, dass** die querbewegbaren Mittel (4 bis 9) zwischen einer ausgefahrenen Stellung, in der das Schwenken (R), das Abrollen (D) oder das Aufrollen (E) der Plane (B) möglich ist und einer eingefahrenen Stellung, in der sie innerhalb des Querprofils des Lastkraftwagen quer eingezogen sind, bewegbar sind.

3. Vorrichtung nach Anspruch 1 oder 2, **dadurch gekennzeichnet, dass** die querbewegbaren Mittel (4 bis 9) einen eine angetriebene Welle (7) zum Aufrollen (E) und Abrollen (D) der unter Spannung gehaltenen Plane (B) aufweisenden Teleskoparm (6) umfassen.

4. Vorrichtung nach einem der vorgehenden Ansprüche, **dadurch gekennzeichnet, dass** die querbewegbaren Mittel (4 bis 9) winkelförmig (5 bis 6) oder bogförmig ausgebildet sind und zum Quereinziehen unter und vor dem Container (2a oder 2 b) geeignet sind.

5. Vorrichtung nach einem der vorgehenden Ansprüche, **dadurch gekennzeichnet, dass** die querbewegbaren Mittel (4 bis 9) unter der Wirkung von Betätigungseinrichtungen (24, 29, 47) für die Querbewegung (T), die im Wesentlichen koaxial zur Schwenkachse (R) angeordnet sind, bewegbar sind.

6. Vorrichtung nach Anspruch 5, **dadurch gekennzeichnet, dass** die Betätigungseinrichtungen (24, 29, 47) für die Querbewegung (T) ein verschiebbares Rohr oder einen verschiebbaren Zylinder (20, 48) einer Kolben-Zylinder-Einheit (47) umfassen, wobei die Kolben-Zylinder-Einheit (47) ein Befestigungselement (9) für eine Betätigungseinrichtung (10) für das Schwenken (R) trägt.

7. Vorrichtung nach Anspruch 6, **dadurch gekennzeichnet, dass** die querbewegbaren Mittel (4 bis 9) an einem Ende (30) einer Betätigungseinrichtung (29, 47) für die Querbewegung (T) befestigt sind.

8. Vorrichtung nach einem der vorhergehenden Ansprüche, **dadurch gekennzeichnet, dass** die querbewegbaren Mittel (4 bis 9) schwenkbar um eine Achse (11) unterhalb des Containers (2a oder 2b) angeordnet sind.

9. Vorrichtung nach Anspruch 8, **dadurch gekennzeichnet, dass** die querbewegbaren Mittel (4 bis 9) zwischen einem großen Abstand, in dem es möglich ist, ein Ende der Plane (B) in die Nähe des Endes des Containers zu bringen und einem verringerten Abstand, in dem es möglich ist, die Plane (B) unter Spannung auf dem Container zu halten, abstandsveränderliche Mittel sind.

10. Vorrichtung nach einem der vorhergehenden Ansprüche, **dadurch gekennzeichnet, dass** sie eine Automatik (46) zum kombinierten Querbewegen (T) und Schwenken (R) der querbewegbaren Mittel (4 bis 9) zum automatischen oder halbautomatischen Abdecken eines Containers mit einer Plane aufweist.

## Claims

1. Device for covering a container (2a or 2b) with a tarpaulin comprising means (4-9) which can be or are fixed to a container, a truck (1) or a container-carrying trailer; of being moved the said means (4-9) transversally (T) to the container, the truck (1) or container-carrying trailer and being capable of pivoting (R ) in relation to the container, truck (1) or container-carrying trailer so that the extremity of a wound tarpaulin (B) can be fixed to an extremity of the container (2a or 2b), then said means are pivoted again to unwind the said tarpaulin (B) and cover the container (2a or 2b) so that it is covered with the tarpaulin; as well as to carry out the inverse operations to uncover the tarpaulin from the container.

2. Device according to claim 1 **characterised in that** the means (4-9) which can be moved transversally are moved between an extraction position allowing for pivoting (R), unwinding (D) or winding (E) of the tarpaulin and a return transverse retraction position inside the transverse contour of the truck.

3. Claim according to claim 1 or claim 2 **characterised in that** the means (4-9) which can be moved transversally comprise a telescopic arm (6) carrying a motorised winding (E) and unwinding (D) roller (7) for winding and unwinding the tarpaulin held under tension.

4. Device according to anyof the previous claims **characterised in that** the means (4-9), which can be moved transversally, are formed at roughly right angles or bent, which can be retracted transversally under and in front of the container (2a or 2b).

5. Device according to whichever of the previous claims **characterised in that** the means (4-9), which can be moved transversally, are moved under the action of actuating means (24, 29, 47) for the transverse (T) movement roughly coaxial to the pivoting axis (R ).

6. Device according to claim 5 **characterised in that** the said actuating means (24, 29, 47) for the transverse (T) movement comprise a sliding tube or cylinder (20, 48) of a jack (47) carrying a hooking part (9) of an actuating means (10) for the said pivoting (R ).

7. Device according to claim 6 **characterised in that** the means (4-9) which can be moved transversally are fixed to one extremity (30) of an actuating means (29, 47) for the transverse (T) movement.

8. Device according to whichever of the previous claims **characterised in that** the means (4-9), which can be moved transversally are mounted to pivot about an axis (11) situated under the container (2a or 2b).

9. Device according to claim 8 **characterised in that** the means (4-9), which can be moved transversally, are varying distance means between a large distance allowing one extremity of the tarpaulin (B) to be placed in the proximity of the said extremity of the container and a lesser distance allowing the tarpaulin (B) to be placed under tension on the container.

10. Device according to whichever of the previous claims **characterised in that** the means comprise an automaton (46) combining the transverse (T) movement and the pivoting of the said means (4-9), which can be moved transversally, so that a pre-determined container can be covered with a tarpaulin automatically or semi-automatically.
